## Europäisches Patentamt
## European Patent Office
## Office européen des brevets

(19)

(11) Veröffentlichungsnummer: **0 061 016**
**B1**

(12) **EUROPÄISCHE PATENTSCHRIFT**

(45) Veröffentlichungstag der Patentschrift:
29.01.86

(51) Int. Cl.⁴: **F 16 C 32/06**

(21) Anmeldenummer: **82101468.5**

(22) Anmeldetag: **26.02.82**

(54) Aerostatisches Lager.

(30) Priorität: **19.03.81 DE 3110712**

(43) Veröffentlichungstag der Anmeldung:
**29.09.82 Patentblatt 82/39**

(45) Bekanntmachung des Hinweises auf die Patenterteilung:
**29.01.86 Patentblatt 86/5**

(84) Benannte Vertragsstaaten:
**AT CH FR GB IT LI NL SE**

(56) Entgegenhaltungen:
DE - A - 2 030 260
DE - B - 1 928 784
DE - U - 6 601 124
US - A - 2 855 249
US - A - 3 171 295
US - A - 3 645 589

Soviet Inventions Illustrated Woche B37,24 Oktober 1979 Sektion Q62
VDI-ZEITSCHRIFT,Band 119,Nr.22,November 1977,Düsseldorf,K.PARSIEGLA "Spindelbelastung und Axiallagermoment bei hydrostatischen Spindellagerungen mit Taschenaxiallagern",Seiten 1073 bis 1080
INDUSTRIE-ANZEIGER,Band 92,Nr.80,25 September 1970,Essen J.SCHMIDT "Druckluftgespeiste

(73) Patentinhaber: **Heinzl, Joachim, Prof. Dr.-Ing., Dreisesselbergstrasse 16, D-8000 München 90 (DE)**
Patentinhaber: **Zehentbauer, Hans, Goethestrasse 15, D-8034 Germering (DE)**

(72) Erfinder: **Heinzl, Joachim, Prof. Dr.-Ing., Dreisesselbergstrasse 16, D-8000 München 90 (DE)**
Erfinder: **Zehentbauer, Hans, Goethestrasse 15, D-8034 Germering (DE)**

(56) Entgegenhaltungen: (Fortsetzung)
**Radiallager aus porösem Werkstoff",Seiten 1892 bis 1893**
**WT-ZEITSCHRIFT IND.FERTIG.,Band 61,Nr.10,Oktober 1971,Berlin J.SCHMIDT "Aerostatische Radiallager aus porösem Werkstoff",Seiten 616 bis 617**

## Beschreibung

Die Erfindung bezieht sich auf ein fremdgespeistes Gaslager aus im wesentlichen porösem Werkstoff mit einer Vielzahl von Drosselstellen am Lagerspalt und Verfahren zu dessen Herstellung.

Es sind verschiedene Lösungen für den Aufbau von aerostatischen Lagern bekannt. In der Druckschrift «Industrieanzeiger» 92. Jahrgang Nr. 80 vom 25.9.1970, Seiten 1892, 1893 ist unter dem Titel «Druckluftgespeiste Radiallager aus porösem Werkstoff» eine Übersicht über derartige Lager und deren Funktion angegeben.

Auch die Nachteile, die derartigen Lagern eigen sind, werden in dieser Druckschrift abgehandelt. Zur Vermeidung von selbsterregten Schwingungen bei aerostatischen Lagern werden dort Massnahmen wie Verkleinerungen der Düsen (Beruhigungskammern) vorgeschlagen. So ist in der SU-A-636 427 ein Luftlager mit einer Resonatorkammer dargestellt, bei der zwischen je einer lagerspaltseitigen und einer einspeisungsseitigen Drossel ein relativ grossvolumiger Hohlraum vorgesehen ist. Durch gänzliches Weglassen dieser Kammern vermindert sich jedoch die Tragfähigkeit der Lager. Dem kann mit einer Erhöhung der Düsenanzahl begegnet werden, was wiederum eine aufwendigere und teurere Fertigung erfordert. Als Beispiel für ein derartiges Lager mit einer Vielzahl von Düsen sind die Ausführungsbeispiele in der US-A-3 645 589 anzusehen.

Als Ersatz für ein Lager mit vielen Drosselstellen an der lagerspaltseitigen Oberfläche wird folgerichtig vorgeschlagen, das Lager aus einem geeigneten porösen und zugleich luftdurchlässigen Werkstoff (z.B. Sinterkohle, Sinterkeramik, Sinterbronze) herzustellen. Ein derartiges Lager bietet gegenüber dem herkömmlichen Lager mit vielen Drosselstellen einen erheblichen Zuwachs an Tragfähigkeit. Es werden in dieser Druckschrift aber auch die erheblichen Schwierigkeiten beim Einsatz derartiger poröser Werkstoffe als Lagerwerkstoffe geschildert. Die Permeabilität des porösen Lagerwerkstoffes beeinflusst entscheidend die Tragfähigkeit des Lagers. Aus einer weiteren Druckschrift desselben Autors sind die Kriterien für die Lagerauslegung bekannt (wt – Z. ind. Fertig. 61 (1971), S. 616 und insbesondere S. 617, linke Spalte). Danach ist man gewissermassen gezwungen, mit einer bestimmten Permeabilität der gefertigten Lagerschale auszukommen und die Lagergeometrie auf die Durchlässigkeit des Lagerwerkstoffes abzustimmen und nicht umgekehrt.

Darüber hinaus ist es aus der US-A-3 171 295 bekannt, ein fremdgespeistes Gaslager aus porösem Werkstoff lagerspaltseitig mit einer Vielzahl von Drosselstellen zu versehen.

Die vorgenannten Besonderheiten zeigen, dass Düsenlager und poröse Lager mit erheblichen Nachteilen behaftet sind, wenn durch äussere Umstände die Lagergeometrie weitgehend vorgegeben ist.

Es ist die Aufgabe der Erfindung, diese Nachteile weitestgehend zu vermeiden und ein aerostatisches Lager zu schaffen, dessen Tragfähigkeit und Steifigkeit den herkömmlichen Lagern mindestens ebenbürtig ist, ohne dass bei der Auslegung des Lagers die Lagergeometrie im bisherigen Masse von der Auswahl des Lagerwerkstoffes abhängig ist. Der Fertigungsaufwand für das Lager soll dabei nicht höher werden, als bei den bekannten Lagern. Diese Aufgabe wird durch die im Kennzeichen des Anspruches 1 angegebenen Merkmale gelöst.

Die Vorteile des erfindungsgemässen Lagers liegen in einer erheblichen Steigerung der Tragfähigkeit und der Steifigkeit gegenüber herkömmlichen Düsenlagern und einer erheblich erhöhten Steifigkeit und Sicherheit gegen selbsterregte Schwingungen gegenüber herkömmlichen Lagern aus porösen Werkstoffen.

Weitere Vorteile, besonders hinsichtlich der Fertigung ergeben sich aus Unteransprüchen, die sich auf die Herstellungsverfahren des erfindungsgemässen Lagers beziehen.

Durch Ausführungsbeispiele wird anhand der Zeichnungen die Erfindung noch näher erläutert. Es zeigen:

Figur 1 ein Planlager mit porösem Werkstoff zwischen den hintereinandergeschalteten Drosselstellen,

Figur 2 ein Planlager aus porösem Werkstoff mit verdichteten Oberflächen,

Figur 3 ein sphärisches Lager aus porösem Werkstoff mit verdichteten Oberflächen,

Figur 4 ein Planlager aus porösem Werkstoff mit beschichteten Oberflächen und geätzten Drosselstellen.

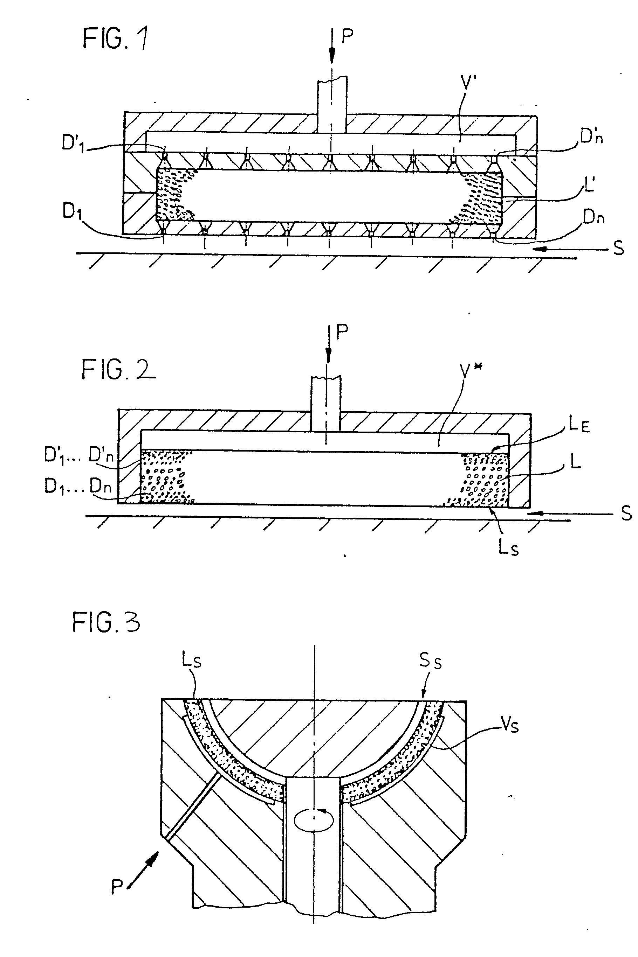

In Figur 1 ist ein Gaslager gezeigt, wobei der Raum zwischen den einspeisungsseitigen und den lagerspaltseitigen Drosselstellen $D'_1...D'_n$, $D_1...D_n$ durch einen Körper $L'$ aus porösem Werkstoff ausgefüllt ist, was die Strömungsverhältnisse in diesem Raum stabilisiert. Die lagerspaltseitigen Drosselstellen $D_1...D_n$ und die einspeisungsseitigen Drosselstellen $D'_1...D'_n$ stellen eine Reihenschaltung von Drosselstellen $D'_1...D'_n$, $D_1...D_n$ dar. Mit dieser Anordnung von Drosselstellen wird die Tragfähigkeit und die Steifigkeit des Lagers gegenüber den herkömmlichen Düsenlagern erheblich gesteigert, da diese auf der Einspeisungsseite nicht über weitere Drosselstellen verfügen.

Figur 2 weist hingegen keine separat gefertigten Düsen-Drosselstellen auf. Dort ist ein Lager aus porösem Werkstoff L vorgesehen. Gegenüber dem Stand der Technik bestehen jedoch erhebliche Vorteile, da die einspeisungsseitige und die lagerspaltseitige Oberfläche $L_E$ und $L_S$ des Lagerkörpers L gezielt verdichtet sind. Durch spanende Verformung werden die Poren des porösen Lagerwerkstoffes gezielt verschmiert, so dass sich in den Oberflächenbereichen $L_E$ und $L_S$ die Luftdurchlässigkeit verändert. Auf diese Weise wird eine Anzahl von Drosselstellen $D'_1...D'_n$,

$D_1...D_n$ erzeugt, wobei die einspeisungsseitigen und die lagerspaltseitigen Drosselstellen hintereinander geschaltet sind. Die verdichteten Oberflächen $L_E$, $L_S$ weisen einen höheren Strömungswiderstand auf, als der unverdichtete poröse Raum im Innern des Lagers L. Die Querströmung im Lager (parallel zum Lagerspalt S) wird durch die Permeabilität des porösen Werkstoffes bestimmt, und die Strömung senkrecht zum Lagerspalt S kann durch das gezielte Verdichten der einspeisungsseitigen und der lagerspaltseitigen Oberflächenbereiche $L_E$, $L_S$ eingestellt werden, so dass die Tragfähigkeit und die Steifigkeit des Gaslagers gezielt beeinflusst werden können. Bei herkömmlichen Lagern mit porösen Werkstoffen konnte die Permeabilität nicht gezielt eingestellt werden. Die Verdichtung der Oberflächen $L_E$, $L_S$ kann beispielsweise durch Verfahren vorgenommen werden, bei denen unter Druck geschliffen wird.

Figur 3 stellt schematisch ein sphärisches Lager dar, bei dem eine poröse Lagerschale $L_S$ mit verdichteten Oberflächen die Verbindung zwischen der Verteilkammer $V_S$ und dem Lagerspalt $S_S$ darstellt.

Selbstverständlich lassen sich auch andere Lagerformen mit einer derartigen Lagerschale bilden. Es seien hier nur zusätzlich Kegellager, zylindrische Lager und Kombinationen der verschiedenen Lager genannt.

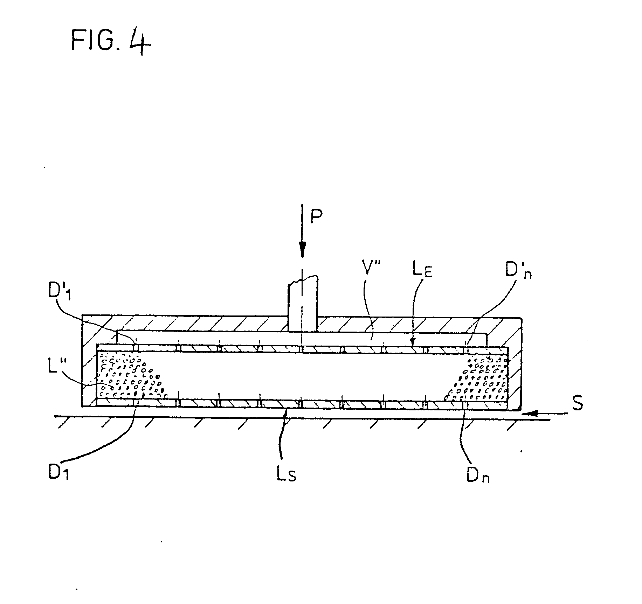

Ein weiteres Lager aus porösem Werkstoff ist in Figur 4 dargestellt. Bei diesem Lager ist der poröse Werkstoff L″ an der einspeisungsseitigen und an der lagerspaltseitigen Oberfläche luftundurchlässig beschichtet, und die Drosselstellen $D'_1...D'_n$, $D_1...D_n$ sind eingeätzt. Ebenso liesse sich eine lichtempfindliche Schicht auf die Oberfläche auftragen. Eine Maske mit den erforderlichen Drosselstellen wird bei der Belichtung der Schichten aufgelegt, die belichtete Schicht entwickelt und anschliessend ausgewaschen, wobei die Drosselstellen bestehen bleiben. Anschliessend wird der Lagerkörper mit einer Schicht bedampft und danach die Drosselstellen ausgewaschen. Mit diesem an sich bekannten Verfahren liesse sich auf einfache Weise jede gewünschte Anzahl und Anordnung von Drosselstellen herstellen und so die Permeabilität des porösen Lagers beeinflussen.

## Patentansprüche

1. Fremdgespeistes Gaslager aus im wesentlichen porösem Werkstoff mit einer Vielzahl von Drosselstellen am Lagerspalt, dadurch gekennzeichnet, dass einspeisungsseitig wenigstens eine weitere Drosselstelle (D′) vorgesehen ist.

2. Fremdgespeistes Gaslager nach Anspruch 1, dadurch gekennzeichnet, dass sowohl lagerspaltseitig als auch einspeisungsseitig annähernd die gleiche Anzahl von Drosselstellen ($D'_1...D'_n$ und $D_1...D_n$) vorgesehen ist.

3. Verfahren zum Herstellen eines fremdgespeisten Gaslagers nach den Ansprüchen 1 und 2, dadurch gekennzeichnet, dass sowohl die einspeisungsseitige als auch die lagerspaltseitige Oberfläche eines aus porösem Werkstoff bestehenden Elements (L) gezielt verdichtet wird, so dass die gezielt verdichteten Schichten ($L_E$, $L_S$) die Drosselstellen ($D'_1...D'_n$, $D_1...D_n$) bilden.

4. Verfahren nach Anspruch 3, dadurch gekennzeichnet, dass die Verdichtung der Oberflächen ($L_E$, $L_S$) des porösen Werkstoffes durch Fräsen mittels Diamantwerkzeugen erzielt wird.

5. Verfahren nach Anspruch 3, dadurch gekennzeichnet, dass die Verdichtung der Oberflächen ($L_E$, $L_S$) durch Überschleifen des porösen Werkstoffes erzielt wird.

6. Verfahren nach Anspruch 5, dadurch gekennzeichnet, dass die Oberflächen ($L_E$, $L_S$) eines Sintermetallkörpers (L) zur gezielten Verdichtung unter Druck überschliffen werden.

7. Verfahren zum Herstellen eines fremdgespeisten Gaslagers nach den Ansprüchen 1 und 2, dadurch gekennzeichnet, dass sowohl die einspeisungsseitige als auch die lagerspaltseitige Oberfläche des aus porösem Werkstoff bestehenden Elements (L″) beschichtet wird, und dass die Drosselstellen ($D'_1...D'_n$, $D_1...D_n$) durch Ätzen der beschichteten Oberflächen ($L_E$, $L_S$) erzeugt werden.

## Revendications

1. Palier à gaz à alimentation externe, réalisé en un matériau pour l'essentiel poreux et présentant une multiplicité de points d'étranglement du côté sustentation, caractérisé par le fait qu'il est prévu du côté alimentation au moins un autre point d'étranglement (D′).

2. Palier à gaz à alimentation externe selon la revendication 1, caractérisé par le fait qu'il est prévu tant du côté sustentation que du côté alimentation approximativement le même nombre de points d'étranglement ($D_1...D_n$ et $D'_1...D'_n$).

3. Procédé pour la fabrication d'un palier à gaz à alimentation externe selon les revendications 1 et 2, caractérisé par le fait que les surfaces, tant du côté alimentation que du côté sustentation, d'un élément (L) constitué d'un matériau poreux sont compactées de façon définie de manière que les couches compactées ($L_E$, $L_S$) forment les points d'étranglement ($D'_1...D'_n$, $D_1...D_n$).

4. Procédé selon la revendication 3, caractérisé par le fait que le compactage des surfaces ($L_E$, $L_S$) du matériau poreux est obtenu par fraisage à l'aide d'outils diamantés.

5. Procédé selon la revendication 3, caractérisé par le fait que le compactage des surfaces ($L_E$, $L_S$) est obtenu par meulage du matériau poreux.

6. Procédé selon la revendication 5, caractérisé par le fait que les surfaces ($L_E$, $L_S$) d'un corps en métal fritté (L) sont meulées sous pression en vue du compactage défini.

7. Procédé pour la fabrication d'un palier à gaz à alimentation externe selon les revendications 1 et 2, caractérisé par le fait que les surfaces, tant du côté alimentation que du côté sustentation, de l'élément (L″) constitué d'un matériau poreux sont revêtues, et que les points d'étranglement

(D'$_1$...D'$_n$, D$_1$...D$_n$) sont obtenus par décapage des surfaces revêtues (L$_E$, L$_S$).

**Claims**

1. Separately supplied gas bearing of essentially porous material with a plurality of throttle points at the bearing gap, characterised in that at least one more throttle point (D') is provided on the feed side.

2. Separately supplied gas bearing according to Claim 1 characterised in that approximately the same number of throttle points (D'$_1$...D'$_n$) and (D$_1$...D$_n$) are provided on both the bearing gap side and the feed side.

3. Process for manufacturing a separately supplied gas bearing according to Claims 1 and 2, characterised in that both the feed-sided and the bearing-gap-sided surfaces of an element (L) made of porous material are selectively compressed so that the selectively compressed layers (L$_E$, L$_S$) form the throttle points (D'$_1$...D'$_n$, D$_1$...D$_n$).

4. Process according to Claim 3, characterised in that the compression of the surfaces (L$_E$, L$_S$) of the porous material is achieved by milling by means of diamond tools.

5. Process according to Claim 3, characterised in that the compression of the surfaces (L$_E$, L$_S$) is achieved by regrinding the porous material.

6. Process according to claim 5, characterised in that the surfaces (L$_E$, L$_S$) of a sintered metal element (L) are reground under pressure for selective compression.

7. Process for manufacturing a separately supplied gas bearing according to Claims 1 and 2, characterised in that the feed-sided and the bearing-gap-sided surfaces of the element (L'') made of porous material are coated and in that the throttle points (D'$_1$...D'$_n$, D$_1$...D$_n$) are produced by etching of the coated surfaces (L$_E$, L$_S$).

FIG. 1

FIG. 2

FIG. 3

FIG. 4